Europäisches Patentamt

European Patent Office

Office européen des brevets

(11) Publication number: **0 682 268 A2**

## EUROPEAN PATENT APPLICATION

(21) Application number: 95107085.3

(51) Int. Cl.6: **G01T 3/00**, G01N 23/05

(22) Date of filing: **10.05.95**

(30) Priority: **10.05.94 US 240587**

(43) Date of publication of application:
**15.11.95 Bulletin 95/46**

(84) Designated Contracting States:
**CH DE FR GB IT LI SE**

(71) Applicant: **YEDA RESEARCH AND DEVELOPMENT COMPANY, LTD.**
**Weizmann Institute of Science**
**Herzl Street at Yavne Road**
**P.O. Box 95**
**Rehovot 76100 (IL)**

(72) Inventor: **Breskin, Amos**
**3 Taran Street,**
**Rehovot 76248 (IL)**
Inventor: **Chechik, Rachel**
**Moshav**
**Beit-Hanan 76868 (IL)**
Inventor: **Dangendorf, Volker**
**12, Pastor-Hayder Weg**
**38176 Wendeburg (DE)**

(74) Representative: **VOSSIUS & PARTNER**
**Siebertstrasse 4**
**D-81675 München (DE)**

(54) **Solid radiation converter for use in neutron imaging detectors.**

(57) A radiation convertor for use in neutron imaging detectors includes apparatus for conversion of energetic primary charged particles resulting from neutron capture into low energy (eV) secondary electrons. The radiation convertor includes efficient secondary electron emitters, which are preferably alkali halide secondary electron emitters which are preferably CsI secondary electron emitters. The radiation convertor preferably combines at least one layer of Gd and an efficient secondary electron emitter preferably of alkali halide, preferably CsI. The layer of Gd may be at least one metallic layer selected from natural Gd and $^{157}$Gd and this is used in combination with a layer of CsI. The neutron convertor may be alternatively 6Li, LiH or $^{177}$Hf used in combination with an efficient secondary electron emitter, preferably alkali halide emitter, preferably CsI. A neutron imaging detector of the invention may combine a secondary emission composite neutron convertor including efficient secondary electron emitters and an electron multiplier which is sensitive to low energy secondary electrons emitted from the composite neutron convertor. In such a neutron imaging detector combination, the electron multiplier may be a vacuum micro channel plate (MCP) multiplier, a vacuum microsphere plate (MSP), or any other vacuum electron multiplier and imaging device, or a gaseous electron imaging multiplier, preferably a gaseous electron multiplier in which the secondary electron multiplication starts at their emission location from the convertor, preferably a low-pressure multistage electron multiplier.

EP 0 682 268 A2

Fig. 1 a

The invention relates to neutron imaging and radiography and in particular to neutron imaging detectors and a solid radiation convertor for use in high accuracy thermal and epithermal neutron imaging detectors.

Thermal neutrons are widely used to study material properties, ranging from basic research in condensed matter physics to practical applications, e.g., for nondestructive material testing. Position sensitive thermal or epithermal neutron detection is often required.

An important technique in this field is neutron diffractometry, where a collimated neutron beam is elastically scattered in a sample and the resulting scattering pattern contains the information on the atomic or molecular structure of the sample. Compared to X-ray diffraction techniques, the related neutron diffraction has several advantages:

a) Hydrogen is a very efficient scatterer for neutrons. This makes neutron diffraction a powerful method for the study of biological samples.

b) The difference in the scatter properties between hydrogen and deuterium allows to use deuterium as "natural" labeling component or tracer in biological probes. In conjunction with the possibility to study living cells of organic samples, this can be applied to study time dependent distribution processes, provided a real time imaging system is applied.

c) As opposed to X-rays, neutrons interact magnetically with matter; this allows to study the magnetic domain structure (size and orientation) of materials.

d) In contrast to X-rays, which travel at the speed of light, thermal neutrons move with the same velocity as the average speed of sound in the lattice. This makes it possible to significantly alter the neutron energy with collective lattice movements like phonons. Collective motion phenomena can be studied by measuring energy gain or loss in conjunction with areal distribution of the scattered neutron beam.

Another very important application of neutron imaging devices is in neutron radiography. Neutron radiography plays an important role as a method of nondestructive material testing. Neutron radiography can sense the variation of neutron absorption by different materials and produces images of the average neutron absorption along a well defined trajectory. In contrast to the more known X-ray radiography, thermal neutrons show certain advantages due to their different physical interaction with matter.

Compared to X-rays, neutrons show stronger attenuation variations between different light elements. Thus, much better contrast may be achieved in radiography, even if elements of similar Z are present in the object. For high Z materials, the neutron penetration depth is much larger than for X-rays. This allows radiography of very large and/or heavy objects, made of steel, lead, etc. Several materials and isotopes have distinguished resonances in their neutron absorption. This allows to separate different isotopes of an element or enhance the contrast for specific absorbers. This may especially be applied in conjunction with tracer techniques to study flow processes. An important application in this field is the scanning of aircrafts in search for corrosion. Another important application is the study of materials in flow, in particular the study of lubrification processes.

Neutron radiography is applied quite sparsely, as compared to similar X-ray techniques, due to the high cost of producing thermal neutron beams. However, neutron radiography complements the radiographic methods and extends its field of application.

Thermal neutrons have been imaged by coupling a radiation convertor to a position sensing device. The most useful convertors are $^6$Li, $^3$He, $^{10}$B and $^{157}$Gd having respective capture cross sections of 0.52, 3, 2.1 and 250 Kb for neutrons of 0.18 nm wavelength. Scintillators doped with the convertor materials can be used in which the secondary particles (electrons, alphas, tritons) induce scintillation photons which are localized by various optical means. Another technique consists of coupling a neutron-convertor to a regular scintillator. Most common are $^6$Li-based crystals, and glass scintillators. The low neutron-capture cross section implies the use of thick convertor-scintillators, which seriously affects the localization resolution. Gd-based scintillators are efficient neutron convertors but are sensitive to gamma radiation, which makes their use difficult in high gamma background environment. They emit low energy electrons (E = 70 keV) which induce poor scintillation, about two orders of magnitude lower as compared to Li-based devices. The low light yield seriously affects the localization properties. Gaseous scintillation in Xe-$^3$He mixtures has been proposed but has the inherent disadvantages like low convertor density and bad imaging properties due to parallax problems.

Various types of position sensitive gas-filled proportional chambers have been developed for the detection of thermal neutrons. One solution is the use of high pressure proportional chambers, where the main compound of the gas filling serves as convertor. A more elegant solution is the use of a solid convertor for converting the neutron radiation to charged particles, which are then detected in a gas detector via an ionization and multiplication process.

Neutron sensitive high pressure avalanche chambers mainly use $^3$He and $BF_3$. The position resolution in this type of detector is limited by two effects. Firstly, the low density of the gaseous convertor necessitates several centimeters long absorber layers. When non-parallel or inclined neutron beams are used, the lateral coordinate of the neutron absorption point vary with the absorption depth, leading to the aberration known as parallax error. Secondly, the range of the neutron induced charged particles escaping the nuclear reaction in the wake of the neutron capture is in the range of 1 cm per bar of He. This leads to a broad charge distribution of the primary ionization, which seriously affects the localization. Both problems can be reduced by increasing the pressure to several tens of bars and/or adding gases with larger stopping power for the charged reaction products. However, the resolution which can be obtained at reasonable pressures is still above 1 mm for a parallel beam. Nevertheless, this type of detector is widely used in small angle neutron scattering (SANS) experiments, where extended neutron sources, large samples and distances of tens of meters between sample and detector do not require sub-mm resolution, while on the other hand, large surfaces have to be covered. The time resolution of these detectors is of the order of a few tens of $\mu s$, mainly due to the long time-of-flight of the thermal neutrons through the sensitive volume, of about 10 $\mu s$ per 1 cm. The gaseous convertor is typically a few cm long thus leading to a large time spread.

These problems can be solved using avalanche chambers coupled to foil convertors, having a very defined interaction surface. The nuclear reaction following a neutron interaction in the foil produces charged particles. These produce secondary ionization electrons in the gas of the avalanche chamber. The avalanche chamber is designed for the registration and imaging of the origin of the neutron induced charged particle track in the gas volume. The performance of such a detector is determined by the following parameters:

- the interaction probability of a neutron in the foil;
- escape probability of charged particles into the sensitive gas volume; and
- capability of the avalanche chamber to amplify and image the primary particles, having usually a wide energy spectrum and a broad angular distribution.

To optimize neutron interaction and charged particle escape probability, work in this direction was focussed on Gd convertors (see references 1, 2). The main difference in the few proposed systems is the method of tracing the origin of the charged particles, escaping the convertor foil. For example, the fast conversion electrons from Gd, can be collimated, limiting their angular distribution after escape from the foil, with a solid pin hole collimator. More elegant is the use of a multistep detector configuration with an "active" collimation in the thin preamplification gap. The "active" collimation is due to the exponential behavior of the electron avalanche in a narrow parallel gap. This exponentially enhances the signal induced by the multiplication of the ionization electrons, released in the proximity of the Gd convertor, acting as a cathode. Both detectors used metallic Gd and focussed on the detection of the origin of the fast electron track in the gas. A similar idea was recently proposed using a Gd convertor coupled to a vacuum MCP multiplier, directly imaging the electrons escaping the convertor.

The detection efficiency of thermal neutrons (about 1.8 Å) was measured in the three proposed solid convertor detectors described above. It is of the order of 20% in the two solid convertor-gas detectors, which measure a large fraction of the escaping electrons (E $\cong$ 70 keV) and of the order of 3% in the MCP-based detector, due to the poor fast-electron detection efficiency of this device. The combination of a Gd convertor with a gas detector provided a localization resolution of the order of 1 mm, limited by the ability to accurately trace the origin of the escaping electrons. The MCP detector, very limited in area, provided a resolution of the same order.

Foil convertors also considerably reduce the time spread of neutron conversion and improve the time resolution of the detectors. Gas detectors comprising convertor foils usually provide timing of a few tens of ns.

The various deficiencies of the prior art are overcome by the present invention. This is accomplished, essentially by providing a radiation convertor for use in neutron imaging detectors that includes apparatus for conversion of energetic charged particles resulting from neutron capture into low energy (eV) secondary electrons. The radiation convertor includes efficient secondary electron emitters which are preferably alkali halide secondary electron emitters, which are preferably CsI secondary electron emitters. The radiation convertor preferably combines at least one layer of an efficient neutron convertor and an efficient secondary electron emitter. The layer of the neutron convertor may be at least one metallic layer selected from natural Gd and $^{157}$Gd and this is used in combination with a layer of CsI. The metal alternatively may be $^{6}$Li or $^{177}$Hf. The radiation convertor may be a layer of 157Gd, natural Gd, a combination of both, $^{6}$Li or LiH or $^{177}$Hf having CsI deposited on each of its front and back faces. Alternatively, the secondary electron emitter may comprise materials such as KCl, CsBr, or CuI. The secondary electron emitter may be in the form of bulk or porous material.

The novel neutron imaging detector of the invention combines a secondary emission composite neutron convertor (CNC) including secondary electron emitters with an electron multiplier which is sensitive to low energy secondary electrons emitted from the CNC. In such a neutron imaging detector combination, the electron multiplier may be a vacuum micro channel plate (MCP) multiplier, or another type of vacuum multiplier like a microsphere plate (MSP), or a gaseous electron imaging multiplier.

A neutron imaging detector of the invention may include a multilaminar device for generating secondary electrons in which the multilaminar device includes a composite neutron convertor having a metallic neutron capture layer selected from natural Gd, $^{157}$Gd, $^6$Li or $^{177}$Hf combined with a secondary electron emission material layer of preferably alkali halide, preferably CsI.

It is an object of the invention to provide novel, efficient, composite radiation convertors to be incorporated in fast, high accuracy, thermal and epithermal neutron imaging devices.

It is another object of the invention to provide reconversion of the neutron-induced energetic charged particles, resulting from neutron capture, into low energy (eV) secondary electrons in which efficient reconversion can be reached using proper secondary electron emitters and multiple secondary electrons emitted at the location of a neutron interaction can be multiplied and accurately imaged and timed with vacuum-based or with gaseous avalanche electron multipliers, which latter provide an efficient way to cover large detection areas.

Other objects of the invention are to provide efficient neutron conversion and detection due to the good single electron detection capability of vacuum and gas multipliers; good two dimensional localization properties over large surfaces without parallax errors or errors due to the considerable range of neutron induced particles in usual detectors; high rate capability of detectors based on CNC's combined with low-pressure gaseous electron multipliers; and low-pressure gaseous multipliers which make such neutron detectors almost insensitive to radiation background, or atmospheric-pressure low-density gaseous multipliers which similarly make such neutron detectors almost insensitive to radiation background.

It is a further object of the invention to provide detectors based on the novel convertors which provide fast timing signals of the neutron conversion event, better than 100 ns, of relevance to fast time-resolved processes.

It is still a further object of the invention to provide detectors based on the novel neutron convertors and on vacuum imaging electron multipliers such as MCP (Micro Channel Plates) and MSP (Micro Sphere Plates), which provide fast timing signals and good imaging of the neutron conversion events.

It is yet a further object of the invention to provide detectors based on the novel convertors which result in improved neutron imaging capabilities and which lead to a reduction in the cost of neutron imaging.

## BRIEF DESCRIPTION OF THE DRAWINGS

Other objects and advantages of the invention will become apparent from the following detailed description of the preferred embodiments when taken in conjunction with the drawings in which:

Figure 1 schematically illustrates the principle of the novel detector; Figure 1a shows the detector combining a composite neutron convertor with two-stage gas avalanche imaging multipliers placed at both sides of the convertor; Figure 1b shows a detector combining a composite neutron convertor with a vacuum operated MCP;

Figure 2 is a schematic view of a novel secondary emission X-ray imaging detector;

Figure 3 is a graphical representation of the measured detector quantum efficiency for X-ray photons of 5.9-60 keV, as a function of the CsI convertor thickness; taken from Ref. 3;

Figure 4a illustrates two dimensional images and a projection thereof obtained by irradiating the detector of Figure 2 with 8 keV photons through a narrow slit, with normal incidence, intrinsic resolution 200 $\mu$m FWHM; taken from Ref. 3;

Figure 4b is similar to Figure 4a but shows a grazing angle of 5° and intrinsic resolution of 50 $\mu$m FWHM; taken from Ref. 3;

Figure 5 illustrates radiographic images of plastic-made syringe, ink-pen and a wrist watch, obtained with the secondary emission detector equipped with an Ag convertor. The images were obtained using a 15-30 keV X-ray generator;

Figure 6 illustrates, graphically, calculated mean number of primary, $\bar{n}_p$, and secondary, $\bar{n}_s$, electrons emitted in one cluster, following the absorption of X-ray photons of different energies, as function of the CsI layer thickness;

Figure 7a illustrates, graphically, theoretical primary electron emission probabilities in backward and forward directions from $^{157}$Gd and natural Gd as a function of the foil thickness at neutron wavelengths 1 and 2 Å;

Figure 7b illustrates calculated triton escape probabilities versus foil thickness of $^6$Li convertors, for neutrons of 0.1 nm and 0.25 nm wavelength;

Figure 8 illustrates, graphically, energy distributions of neutron-induced primary electrons emitted from a 5 $\mu$m thick $^{157}$Gd convertor in the forward and backward directions; neutron wavelength is 1.8 Å;

Figure 9 is a schematic view of a composite neutron convertor, composed of a $^{157}$Gd foil coated with CsI on its "front" and "back" surfaces. It also illustrates primary (PE) and secondary (SE) electrons emitted from the convertor, following neutron conversion;

Figure 10 illustrates, graphically, the calculated emission probability of PE, PE accompanied by SE and the total emission probability from CsI coated 5 $\mu$m $^{157}$Gd convertor per incident neutron of 1.8 Å, in the forward and the backward directions, for different thickness of CsI coating;

Figure 11 shows the calculated statistics of SEs accompanying a PE. In Figure 11a, the average number of SEs is presented as function of the CsI thickness. In Figure 11b, the full distribution of the number of SEs is presented for the case of 200 nm CsI;

Figure 12 is an example of a pulse trail resulting of a $\beta$-particle track traversing a low-pressure (10 Torr) gas, after gas multiplication; each impulse represents a single detected electron;

Figure 13 is a schematic view of the neutron imaging detector, combining a composite convertor foil and a gaseous multi-step electron multiplier, where n: incoming neutron, CF: convertor foil (Gd or Li), SE: secondary electron emissive layer (CsI), PG: preamplification gap, G: 81% transmission grid, C1,C2,A: cathodes and anode of multiwire proportional chamber (MWPC);

Figure 14 is a schematic illustration of a beam set up to measure detection efficiencies and pulse height distributions (Fig. 14a); and position resolution of the neutron detector (Fig. 14b); where T: diffractometer "TONNE", C1: 1 cm$^2$ Cd collimator, TM: $^3$He intensity monitor, BM: moveable $^3$He reference detector, Ss: Soller slit, B: Boron collimator, PB: Lead-collimator, C2: 1 mm or 0.4 mm wide Cd-slit. PSD: avalanche chamber with the foil convertor;

Figure 15a illustrates thermal neutron (0.115 nm wavelength) - induced pulse-height spectra obtained with a natural and 5 $\mu$m thick CsI-coated Gd convertor, in the detector shown in Fig. 13. The gaseous avalanche electron multiplier is operated with isobutane at a pressure of 24 mbar. The MWPC anode voltage is 1131 V for the Gd convertor and 1061 V for Gd/CsI. Despite the 2 times lower gain for the Gd/CsI convertor setup, the detector yields larger pulse-heights;

Figure 15b illustrates the neutron-induced counting rate, measured as described in Figure 15a, with Gd and Gd/CsI convertors, as functions of the detector voltage. The saturation of the counting rate indicates a full neutron detection efficiency. It is evident that the full efficiency can be obtained with both convertor types, but at considerably lower voltages (lower gain) with Gd/CsI;

Figure 16 illustrates projected slit images obtained with the avalanche detector of Fig. 13 with a) Gd/CsI and b) Li/CsI convertors. The slit has a width of 0.4 mm and is irradiated with a 0.115 mm neutron beam of 2.9 mrad divergence. The measured resolutions are shown in the figures. The intrinsic (fwhm) resolutions are 0.65 mm and 0.4 mm for Gd/CsI and Li/CsI respectively;

Figure 17 illustrates comparative 2D radiographic images of a plastic syringe, made with thermal neutrons, recorded with a) a Polaroid Nr. 57 film preceded by a Li/ZnS convertor; b) a secondary electron emission detector equipped with Li/CsI convertor. The image in panel b, presented on an enlarged scale and inversed black/white scale, shows clearly the difference in material composition; and

Figure 18 illustrates comparative 2D neutron radiographic images of a small (25 mm in diameter) metal ball-bearing, made with thermal neutrons, recorded with a) a Polaroid Nr. 57 film preceded by a Li/ZnS convertor; b) a secondary electron emission detector equipped with a Li/CsI convertor. The images indicate clearly the presence (top) or absence (bottom) of grease in the bearing.

**REFERENCES**

1. A.P. Jeavons, N.L. Ford, B. Lindberg and R. Sachot, "A New Position Sensitive Detector for Thermal and Epithermal Neutrons," Nuclear Instruments and Methods 148 (1978)29.

2. G. Melchart, G. Charpak, F. Sauli, G. Peterson and J. Jacobe, "The Multistep Avalanche Chamber as a Detector for Thermal Neutrons," Nuclear Instruments and Methods 186 (1981) 615.

3. I. Frumkin, A. Breskin, R. Chechik, V. Elkind and A. Notea, "Properties of CSI-Based Gaseous Secondary Emission X-ray Imaging Detectors," Nuclear Instruments and Methods A 239 (1993) 337.

4. A. Breskin and R. Chechik, "High Accuracy Imaging of Single Photoelectrons by Low-Pressure Multistep Avalanche Chamber Coupled to a Solid Photocathode," Nuclear Instruments and Methods 227 (1984) 24.

## DETAILED DESCRIPTION OF THE PREFERRED EMBODIMENTS

Referring now to the drawings, the novel thermal and epithermal neutron detector consists of a solid convertor coupled to an efficient electron multiplier. Either vacuum (small area) or gaseous (large area) electron imaging multipliers may be used.

The major problems solved by the invention are the efficiency of detecting the neutron induced charged particles and the localization and timing properties.

According to the invention described below, the energetic neutron induced charged particles emerging from the neutron convertor are further inducing a multitude of secondary low-energy electrons, thus enhancing their detection efficiency and the localization and timing resolution.

This is accomplished by developing the novel "Composite Neutron Convertors" (CNC), in which the neutron induced charged particles (electrons, tritons, alphas) undergo secondary interactions with another material, resulting in a very low energy (eV) multiple secondary electron emission. These can be efficiently detected and precisely timed and localized. The invention is a new development of theoretical and experimental work in the related field of high resolution X-ray imaging detectors based on solid convertors combined with gas avalanche electron multipliers. Certain classes of materials, e.g., alkali halides, show very high secondary electron emission yields due to efficient low-energy electron transport properties in the solid and low work functions. CsI is a reasonably stable material in air and is well suited for exposure to normal detector gases. CsI can release up to several tens of slow secondary electrons (SE) per single fast incident primary electron (PE) of a few keV energy. Several secondary electrons are induced by higher energy incident electrons (10-100 keV). Similar materials, other than CsI, can be used in combination with thermal and epithermal neutron convertors.

The composite neutron convertors can be formulated as follows:

1. Combined Gd-metal/CsI layers, i.e., a metallic layer of natural Gd or $^{157}$Gd, or combination of both, with an evaporated CsI layer. The CsI layer is used as convertor of fast conversion electrons to slow secondary electrons. The influence of the thickness of the Gd layer and the CsI layer are optimized.

2. Gd-based, or other convertor, compounds with better secondary electron emission characteristics.

3. Combined $^6$Li - CsI or $^6$Li-enriched Li-CsI convertor. $^6$Li has only a relatively small neutron capture cross section ($\sigma$ = 520bn) and a layer of about 230 microns of $^6$Li is needed to absorb about 50% of thermal neutrons. However, the emitted triton is ejected with a kinetic energy of 2.74 MeV and has a range of 136 microns in $^6$Li metal. The emitted triton induces several tens of low-energy (eV) SEs from a secondary electron emitter. Coating Li with an efficient SE-emitter enables a potentially powerful composite convertor to be obtained.

4. $^6$LiH (lithium hydride) may also be used. LiH has a relatively high density (0.7 g/cm$^3$ compared to 0.45 g/cm$^3$ for $^6$Li metal) which results in a reduced triton range, of only 80 microns.

The secondary emission CNC's are used with electron multipliers sensitive mostly to low energy secondary electrons. Best are vacuum electron multipliers (e.g. MCP'S) and multistage gaseous avalanche multipliers operating at pressures of a few Torr. The latter benefit from the "active" collimation technique and, therefore, will sense the secondary electrons emitted from the CNC and, with some low probability, single ionization electrons deposited in the low-density gas by the primary particles. This is due to the exponential behavior of the primary avalanche process.

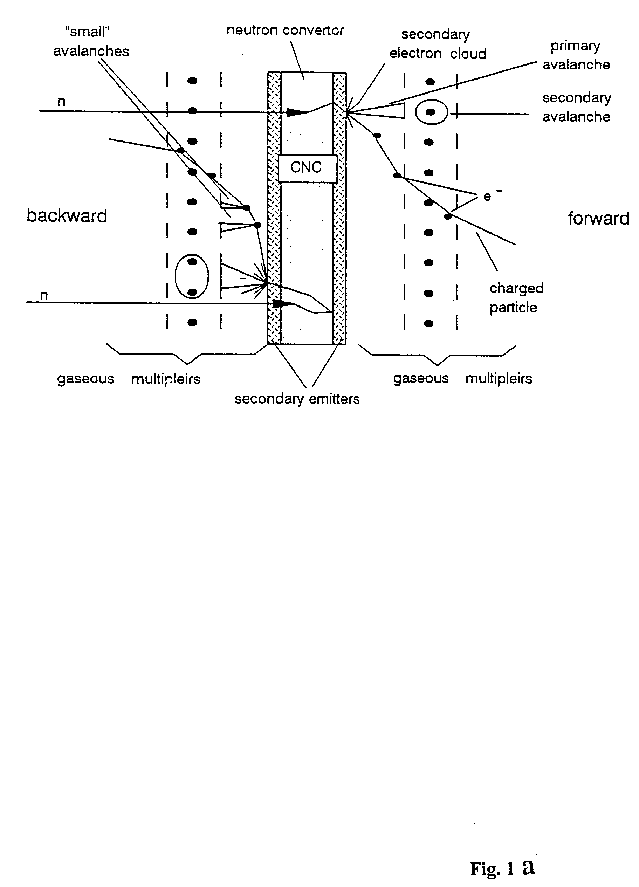

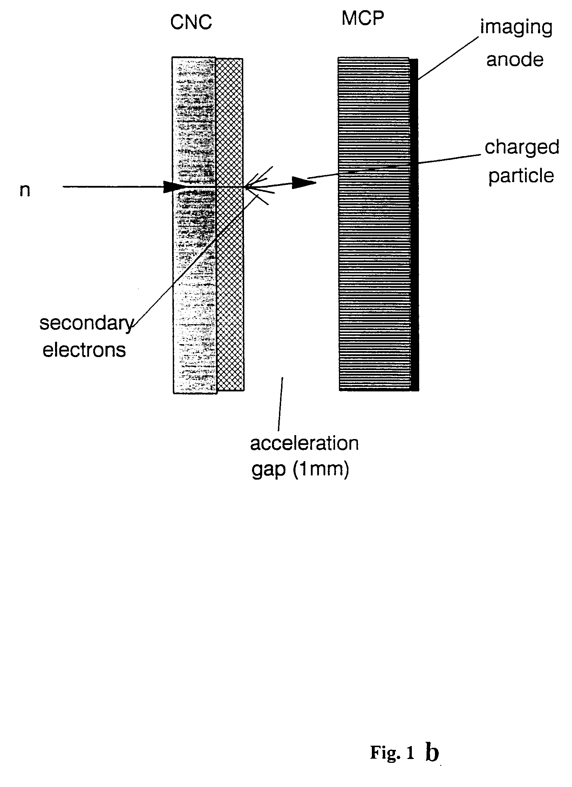

A detector set-up is shown in Fig. 1 The detector illustrated in Fig. 1a combines a composite neutron convertor with two-stage gaseous avalanche imaging multipliers placed at both sides of the convertor. Most detected "events" are due to the secondary electron "clouds" emitted from the convertor. Ionization electrons released in the low-density gas along the particle path mostly induce "small" avalanches (small pulses), due to the exponential nature of the multiplication process.

The detector illustrated in Fig. 1b combines a composite neutron convertor with a vacuum operated MCP electron multiplier equipped with an imaging anode readout on its back. The secondary electrons emitted from the composite convertor are accelerated under an electric field and detected by the MCP. The primary charged particles are also detected by the MCP, possibly at a location which is shifted from the neutron conversion point, due to the angular emission.

The physical properties of the convertor that are significant are: neutron conversion efficiency, secondary emission efficiency into vacuum, using vacuum multipliers (e.g., MCP's) and into gas at low pressure and at atmospheric pressure. The surface emission is of great significance for the timing and localization properties. The fact that the secondary electrons start to be multiplied at their emission location eliminates the deterioration of the localization and timing properties due to electrons drift in the gas. It also is responsible to the lower efficiency of the detector to avalanches originating from gas ionization, induced either by the primary charged particles or by background radiation. The low-pressure operation (a few Torr) of the gaseous multipliers provides, on the one hand very high gains ($10^6$ - $10^8$), high rate capability and fast timing, and on the other makes the multiplier almost insensitive to background radiation and even to the energetic primary charged particles escaping from the CNC as discussed above. The efficiency and localization properties of detectors equipped with the CNC's are superior to that of normal neutron convertors, under normal and angular incidence. The latter was found to provide superior efficiency and localization properties using X-ray detectors based on secondary emission from CsI convertors.

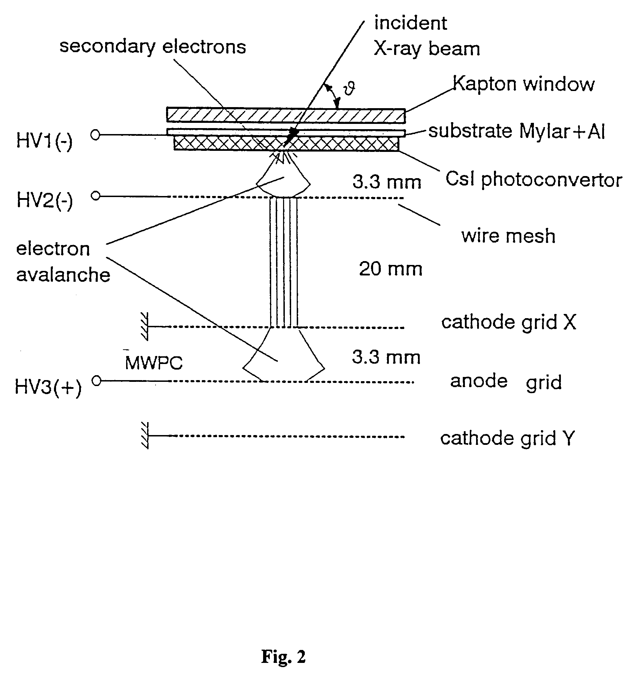

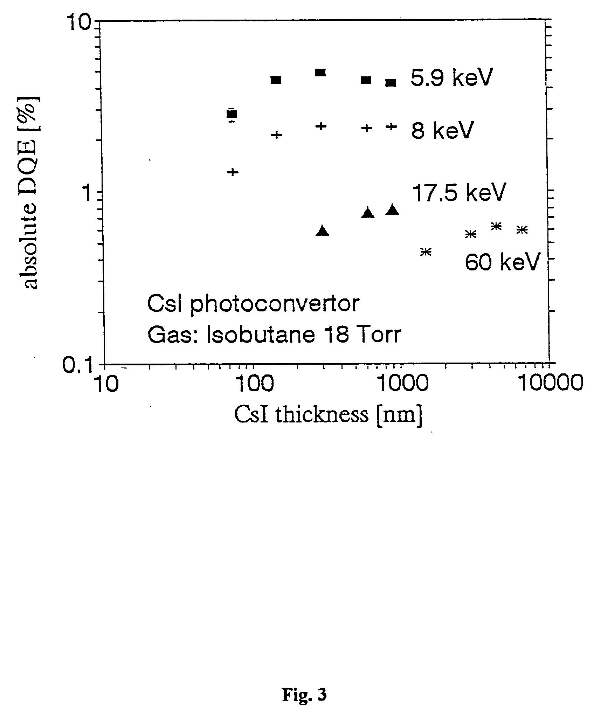

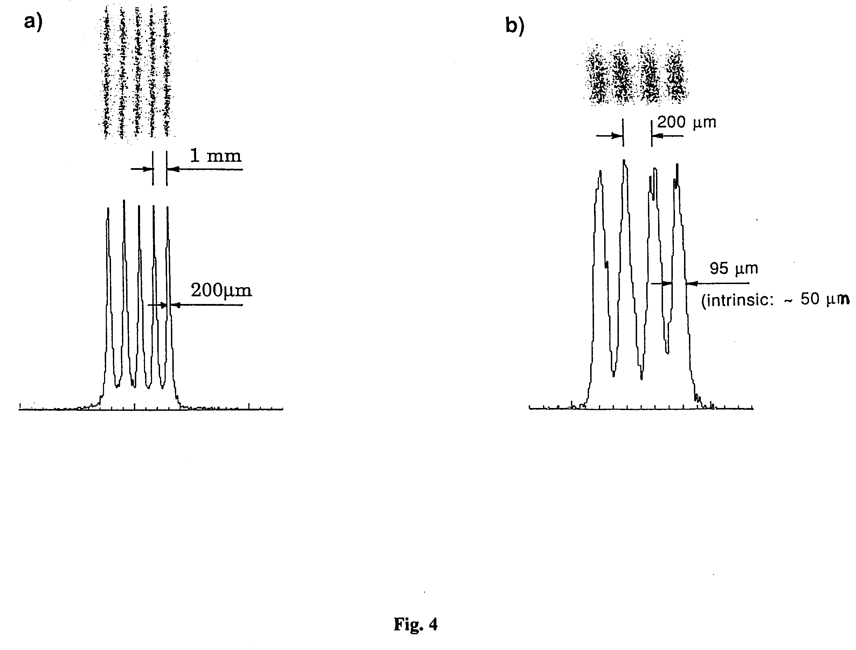

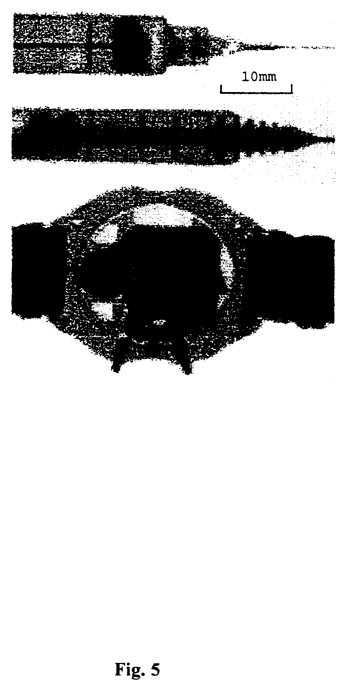

Fig. 2 shows a novel secondary emission X-ray imaging detector. Secondary electrons emitted from the solid photoconvertor are preamplified at their emission location, transferred and localized in the MWPC by a two-dimensional cathode readout system. Detectors combining CsI convertors and gaseous imaging SE multipliers as developed for X-ray imaging (Fig. 2) provide very interesting results in terms of detection efficiency (Fig. 3) and localization properties (Figs. 4a and 4b and Fig. 5). It has been demonstrated that the cloud of secondary electrons, emitted at the impact location of the incident X-ray photon, can be efficiently multiplied and imaged with an accuracy of 200 $\mu$m.

It is shown that both the photon conversion efficiency and the localization accuracy are enhanced by $1/\sin\theta$, at an angular radiation incidence under an angle $\theta$. This results in a localization accuracy (in one dimension) of the order of 50 $\mu$m [FWHM] at low angle incidence (Fig. 4b).

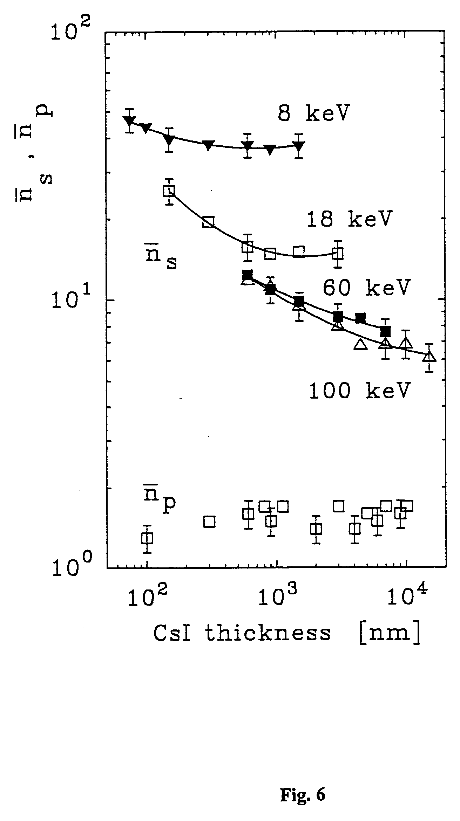

Models describing the secondary emission process were developed for alkali-halides. Simulation codes developed enable the calculation of the interaction process between the incident radiation and the convertor material and the prediction of conversion and SE emission efficiencies, SE yields and energy distributions of these secondary electrons. Fig. 6 shows, for example, the expected average SE yield emitted in one cluster following the absorption of X-ray photons, for various X-ray energies, as function of the CsI thickness.

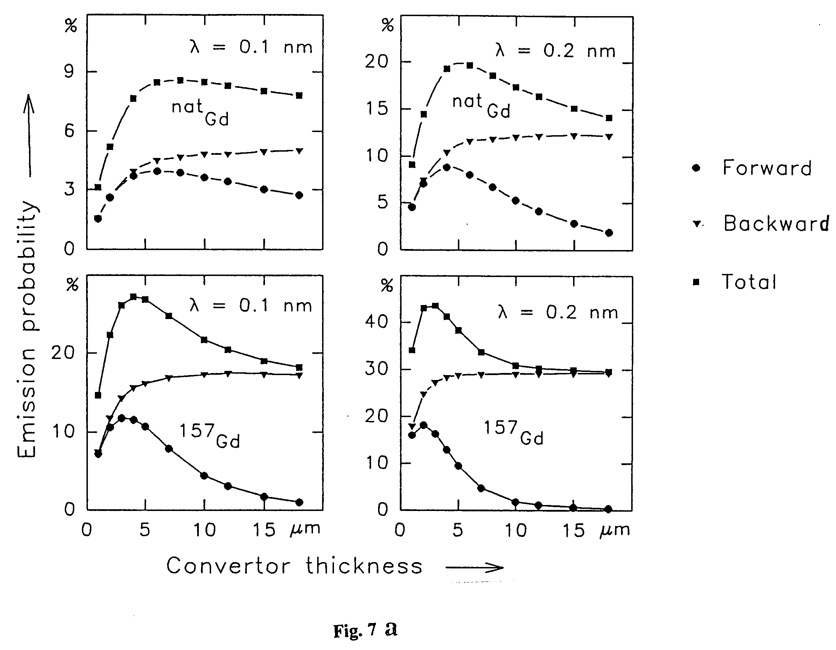

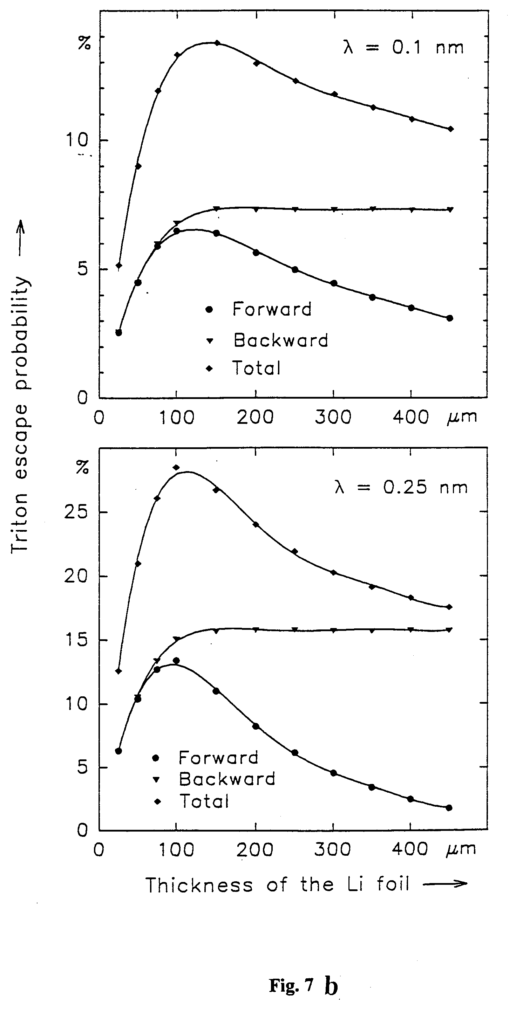

The response of neutron convertors combining thin $^{157}$Gd and natural Gd foils and CsI SE layers have been investigated theoretically. Fig. 7a shows calculated data on the neutron-induced electron emission efficiency, from Gd convertors. It includes the neutron conversion efficiency and the electron energy-loss and escape probability. It is shown that maximum escape efficiencies for 2Å (20 meV) neutrons are of 20% for natural Gd and about 43% for $^{157}$Gd, for electrons escaping from both sides of the convertor.

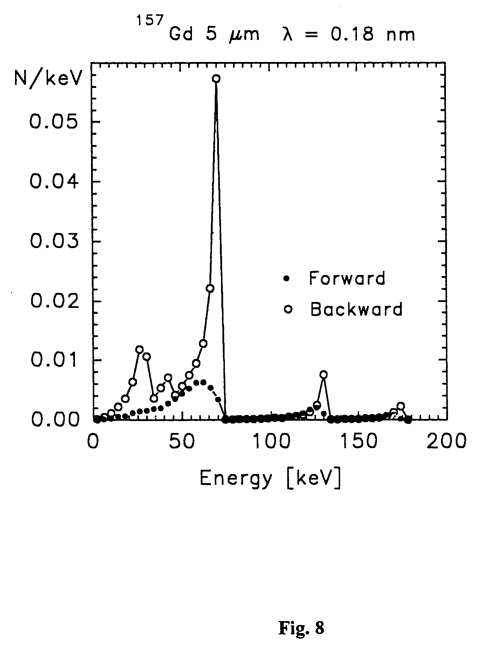

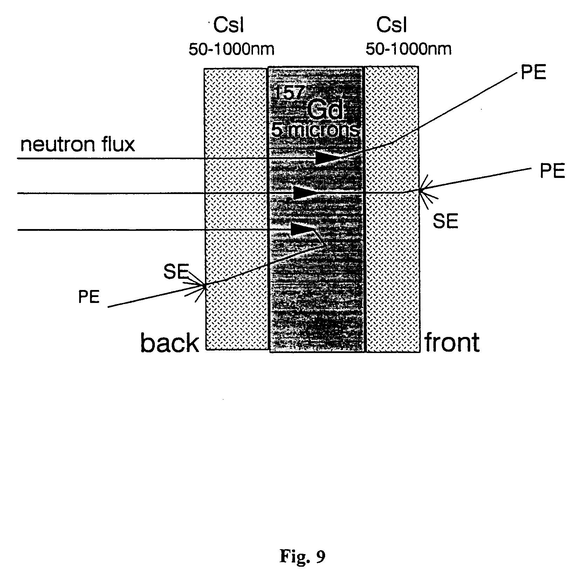

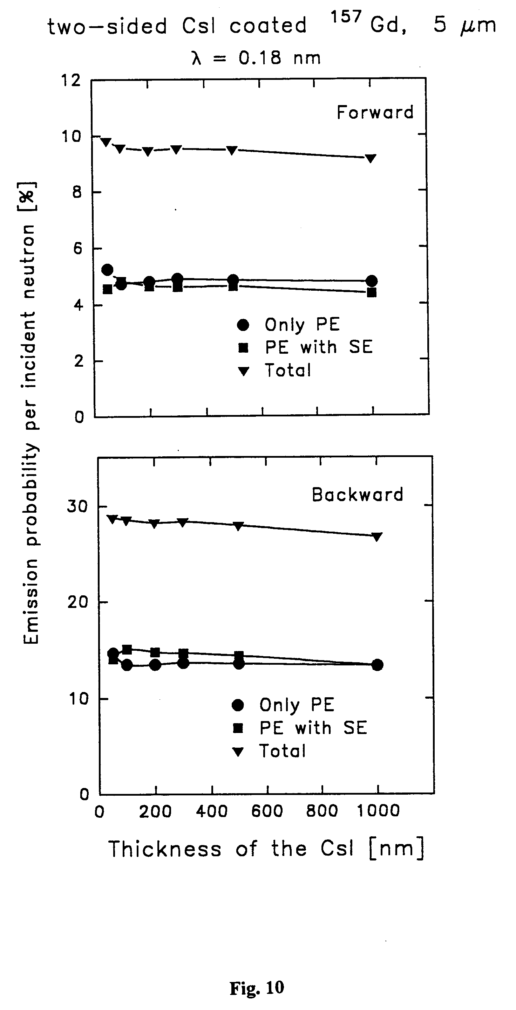

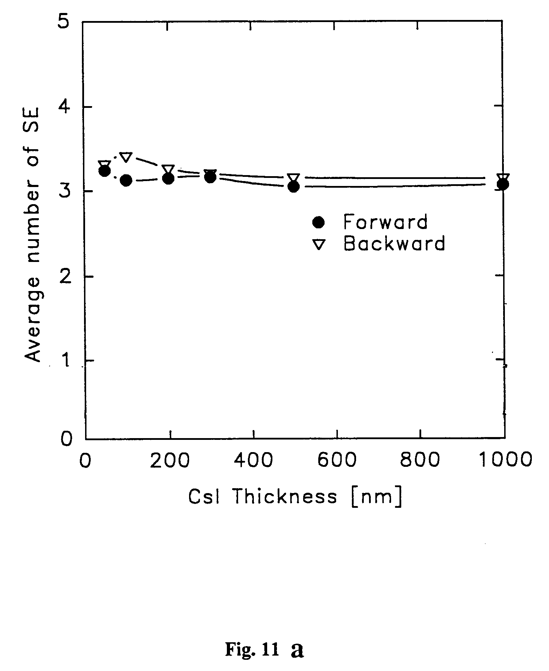

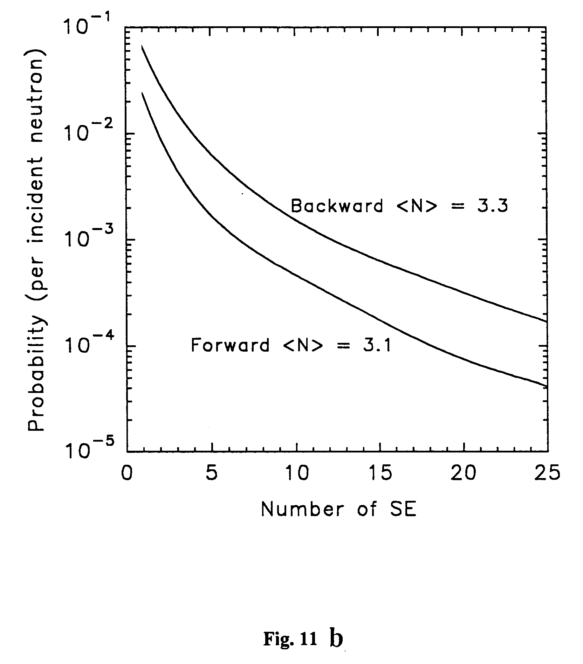

The energy distributions and yields of energetic neutron induced electrons escaping from a 5 $\mu$m thick $^{157}$Gd convertor have been calculated, as shown in Fig. 8. Due to the exponential decay of the neutron flux in the foil, the forward and backward energy distributions are very different. The outgoing energetic electrons interact with 50-1000 nm thick CsI layers, deposited on both sides of the $^{157}$Gd convertor, as shown in Fig. 9. Calculation of this interaction process and the resulting SE emission were carried out, taking into account the exact energy distribution of the fast electrons as they emerge from the Gd, and their angular incidence on the CsI layer. The SE production and escape probabilities were calculated. The calculations indicate the following: Almost independent of the CsI thickness, for 100 incident neutrons of 1.8 Å on a $^{157}$Gd-based CNC, on the average 9.5 neutron induced electrons (NIE) in the forward direction and 29.8 NIE in the backward direction are emitted from the Gd. After interactions in the CsI layers, 9.5 NIE escape the CNC in the forward direction and 28.1 NIE in the backward direction. About half of the NIE are accompanied by SEs, in the forward and in the backward directions. Namely, there are 4.6 and 14.2 NIE in the forward and the backward direction, respectively, which are accompanied by low-energy secondary electron (SE). The average number of SE per event is about 3. The results of these calculations are shown in Figs. 10, Fig. 11a and Fig. 11b.

Thus, for 100 incident thermal neutrons of 1.8Å, on a 5 $\mu$m $^{157}$Gd-based CNC, 37.6 NIE escape the CsI layer. For 18.8% of the incident neutrons low energy SE are emitted with an average number of 3 electrons per event. This type of event will enhance the neutron detection efficiency and the localization resolution.

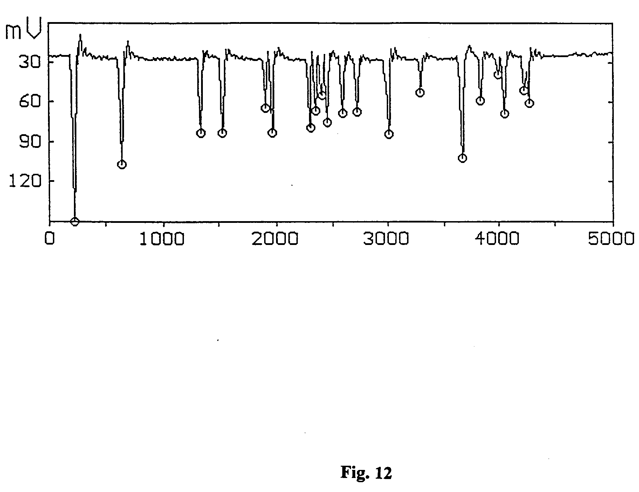

The use of such convertors, equipped with electron multipliers on both sides of the CNC is encompassed by the invention. Vacuum electron multipliers (e.g. MCP's), and high gain, low-pressure, multistage gaseous electron multipliers developed by the inventors, have close to 100% efficiency in detecting and imaging single electrons and are a preferred embodiment of the invention. Such devices are efficiently used for the imaging of single UV-photons and for counting single electrons (see Fig. 12). In Fig. 12, each pulse corresponds to a single ionization electron collected from a "conversion" volume and individually amplified in a multistage gaseous avalanche multiplier of the type proposed here. The device has excellent sensitivity to single electrons.

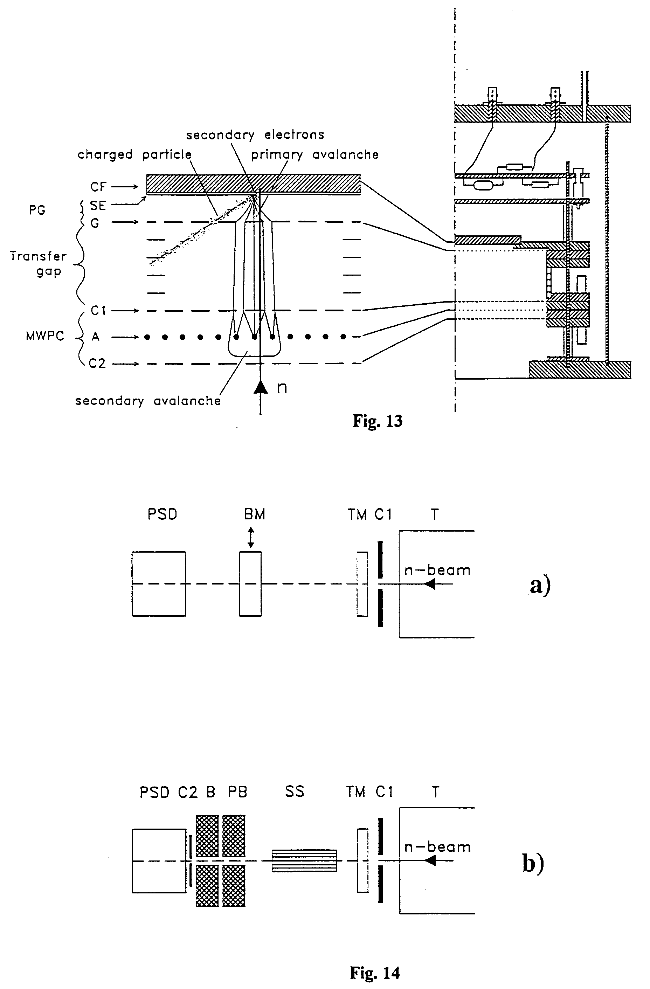

A sketch of the neutron imaging detector and a functional scheme are presented in Fig. 13. The detector consists of a multilayer convertor foil coupled to a multistep avalanche chamber. Neutrons enter the detector volume through a 0.5 mm thick and 75 mm in diameter Al-window, traverse the gas and the electrode-structure of the avalanche chamber and finally hit the convertor foil. Charged particles are detected in the backward direction (with respect to the neutron beam). The active elements are mounted in a vacuum vessel made of stainless steel. The detector was operated with isobutane in a differential flow mode at various controlled pressures in the range of 5-40 mbar. The neutron convertor foil material was deposited on a 5 mm thick, 75 mm in diameter aluminum disk. Two different convertor materials were used: natural Gd and natural Li.

A 300 $\mu$m thick natural Gd foil was glued onto the Al disk. The Gd-surface was coated with CsI layers of various thicknesses, deposited by standard vacuum evaporation. A low density CsI film of spongy structure was produced by evaporating in a 7.5 mbar Ar atmosphere in the evaporation jar. Under this evaporation condition it is known that the deposited layer has the structure of a sponge where the average density is only a few percent of the natural bulk density of solid CsI. It is expected that this structure, with its large surface to volume ratio, leads to an enhanced secondary electron emission. We did not have any control on the effective mass of CsI deposited on the Gd since the thickness monitor did not function under these evaporation conditions.

Li-convertors were prepared by vacuum deposition of natural Li on a polished aluminum disk. Layers of 30 $\mu$m and 60 $\mu$m thickness were produced. In a second evaporation step, without breaking the vacuum, a 1 $\mu$m thick CsI layer was deposited on the Li film. Since both, Li and CsI, are hygroscopic, special care was taken to keep the exposure of the convertor to air during the mounting procedure below 1 minute. The purity of the CsI was 99.5%. Table I presents a list of the convertor foils and secondary emission coatings produced and investigated within the framework of this study.

TABLE 1

| convertor material | thickness ($\mu$m) | CsI layer (nm) | structure |
|---|---|---|---|
| natural Gd | 300 | 0 | bulk |
| natural Gd | 300 | 50 | bulk |
| natural Gd | 300 | 500 | bulk |
| natural Gd | 300 | 1000 | bulk |
| natural Gd | 300 | 5000 | bulk |
| natural Gd | 300 | undefined | spongy |
| natural Li | 30 | 1000 | bulk |
| natural Li | 60 | 1000 | bulk |

A detailed description of low-pressure multistep avalanche chambers and their operation is known in the art. See for example Ref. 4, herein incorporated by reference. A scheme of the set up used in this measurement is presented in Fig. 13. The preamplification gap is defined by the conversion foil and an 81% transmission grid made of stainless steel. The width of the gap is 2 mm and it is operated in a proportional amplification mode. After preamplification avalanche electrons are transferred to the second multiplication region through a 20 mm long drift and diffusion gap which improves the operation stability at high gains. The second amplification stage, a multiwire proportional counter, consists of a 20 $\mu$m in diameter, 1 mm spaced wire anode plane placed between two 50 $\mu$m in diameter, 1 mm spaced wired cathode planes. The localization of the center of the avalanche, corresponding to the neutron capture location in the convertor foil, is obtained by analyzing the induced signals on the cathode wires, applying the well known delay-line readout technique.

The anode wire signal, processed by a low noise charge sensitive preamplifier and a linear amplifier provides the avalanche size. For the position measurement the anode and cathode signals are processed by fast linear amplifiers, constant fraction discriminators (CFD) and CAMAC driven time-to-digital convertors (TDC). Simultaneously, the fast anode signal is branched to a charge integrating ADC. For each registered event the two dimensional position and the pulse-height information could be recorded and stored in list-mode files. Data acquisition and analysis was controlled by a PC and a CAMAC-based data acquisition system.

Using the neutron beam set-up, the goals of the measurements were the determination of the neutron detection efficiency, the study of the influence of the CsI secondary electron emissive layers on the pulse-height spectra and the investigation of the imaging properties of the detector.

The measurements were made with the diffractometer "TONNE" (T) at the 1 MW-reactor of the PTB (Braunschweig, Germany). A monochromatic neutron beam of 0.115 nm wavelength and a beam divergence of about 17.5 mrad was selected by a Si(311) monochromator. Fig. 14a shows the beam set-up as it was used to measure detection efficiency and pulse-height spectra. A neutron beam of 1 * 1 cm$^2$ size was collimated by a Cd slit (C1). A 96% transmission $^3$He-proportional chamber (TM) served as monitor of the beam intensity during all the measurements. The absolute neutron flux was determined by a calibrated $^3$He-proportional chamber (BM), of 80% detection efficiency for 0.115 nm neutrons.

Fig. 14b shows the set up used for measuring the position resolution. Most of the data were obtained with the full beams of 17.5 mrad divergence. However, this beam divergence leads already to a geometric broadening of 1.2 mm (total width) at the position of the convertor foil, which obscures the superior detector performance. During the later measurements a 2.9 mrad soller-slit (SS) was available. With this collimator the broadening effects could be reduced to 0.2 mm (total width). Slits of 1 and 0.4 mm width, made of Cd and Gd were mounted directly on the detector entrance window and were radiographically imaged by the detector. Additional collimators of 50 mm thick lead (PB) and 50 mm thick plastic bricks containing boron (B) were inserted in the beam to reduce the background by neutron-induced gamma rays from the Cd slit.

## RESULTS AND DISCUSSION

To obtain maximum neutron detection efficiency with Gd-based convertors, the avalanche chamber must be capable of detecting events originating from down to only one slow secondary electron in the vicinity of the convertor surface within the preamplification gap. Therefore, to achieve a counting rate plateau the chamber must be operated at high gas amplifications of several times $10^6$. To determine the gain capability of the detector, the neutron convertor foil was replaced by a polished A1 photocathode and irradiated with W-light from a Hg (Ar) lamp. Thus, the avalanches were initiated by single photo-electrons from the photocathode. Close to 100% of the signals are clearly separated from the noise. At this high gain of about $4 * 10^6$, the detector operates in a stable way over long periods of time even in the neutron beam.

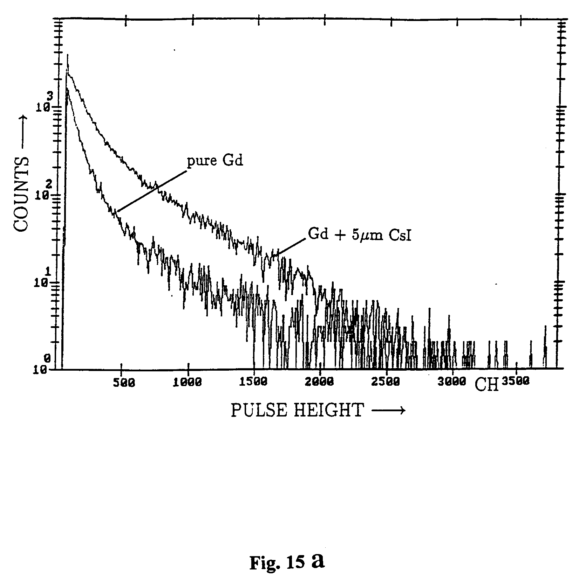

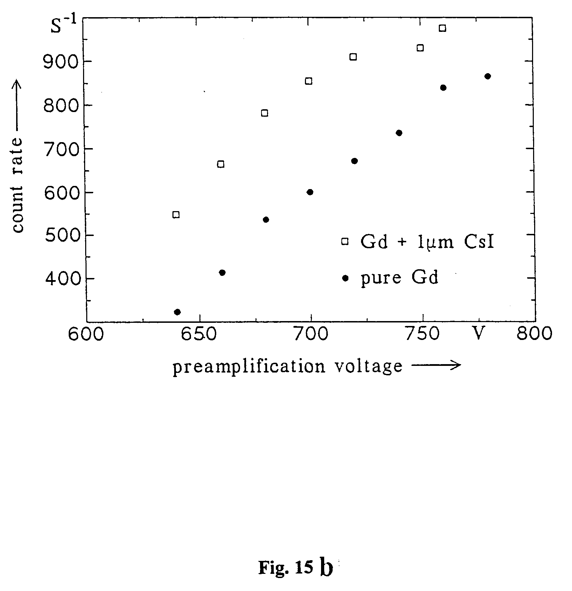

For all convertors investigated the pulse-height distributions and the total detection efficiencies for neutrons at the wavelength of 0.115 nm were measured at various gas pressures and voltages. The results are summarized in Table II. Despite the fact that the detector with the pure Gd-convertor is operated at significantly higher gain, the pulse-height spectrum obtained with the composite convertor of Gd/CsI shows a significant enhancement of events with medium pulse-heights, as shown in Fig. 15a. Also, as shown in Fig. 15b, the counting rate saturates at much lower voltages when Gd/CsI is used, as compared to pure Gd. These facts reflect the expected increase in the number of slow electrons in the preamplification gap by secondary electron emission from the CsI films. These results agree well with observations obtained with X-ray detectors, where pulse-height distributions and counting rate saturation with metal and CsI X-ray convertors were compared. Using CsI-coated convertors the detector reaches a counting rate saturation at significantly lower voltages, which is important for its long-term operation stability.

Table II lists the measured neutron detection efficiencies obtained with natural Gd- and Li- based convertors at different operating pressures of the avalanche chamber. Note that the high values at 40 mbar are due to an increased background sensitivity of the detector and not to a true neutron-sensitivity. The detection efficiency of about 8% measured with natural Gd convertor is in good agreement with the calculations, as seen in Fig. 7a. The results obtained with natural Li are also in good agreement with theoretical calculations of Fig. 7b, taking into account the thickness of Li and the abundance of $^6$Li in the natural Li foil used. These preliminary results are very encouraging and indicate that with an optimized CNC, enriched with $^{157}$Gd or $^6$Li, the theoretically predicted efficiencies may be obtained.

TABLE II

| convertor material | gas pressure (mbar) | detection efficiency (%) |
|---|---|---|
| 300 $\mu$m nat. Gd | 24.5 | 8.0 |
| 300 $\mu$m Gd/50 nm CsI | 40.4<br>24.4<br>12.4 | 13.4<br>8.5<br>6.0 |
| 300 $\mu$m Gd/1000 nm CsI | 24.1<br>12.9 | 9.0<br>8.5 |
| 300 $\mu$m Gd/5000 nm CsI | 40.9<br>23.9<br>12.9 | 10.4<br>8.6<br>8.2 |
| 300 $\mu$m Gd/spongy CsI | 24.0<br>13.0 | 7.3<br>6.0 |
| 30 $\mu$m Li/1000 nm CsI | 12.9 | 0.26 |
| 60 $\mu$m Li/1000 nm CsI | 12.0<br>6.8 | 0.56<br>0.50 |

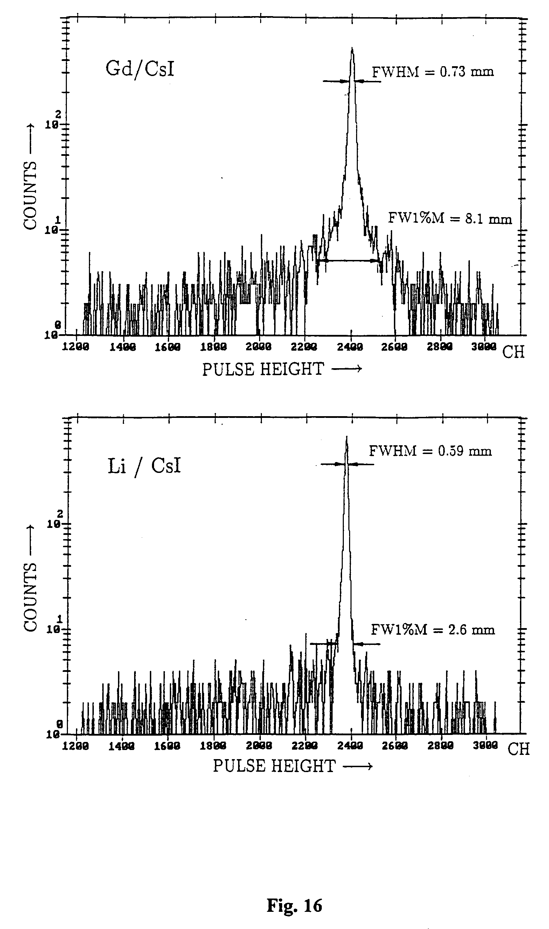

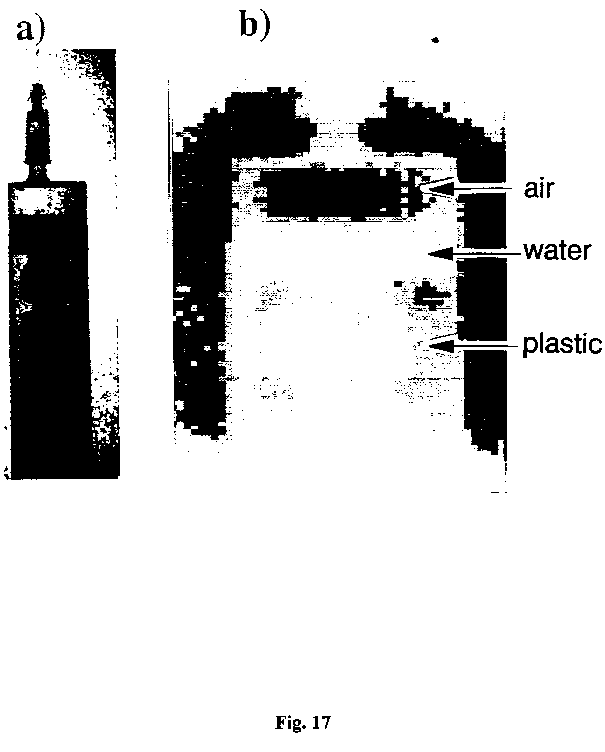

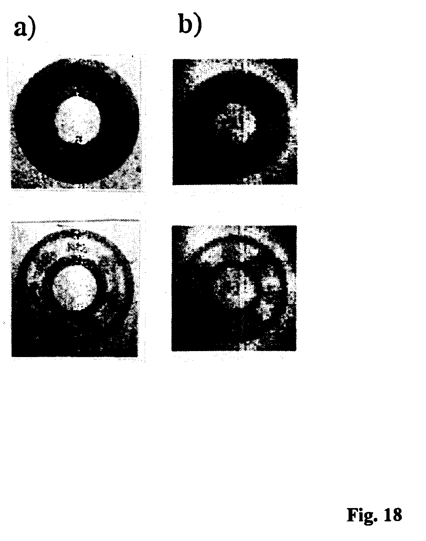

The localization resolution was measured by irradiating the detector of Fig. 13 equipped with Gd/CsI and Li/CsI convertors, through various slits. The neutron beam divergence was 2.9 mrad. The data recorded with a 0.4 mm wide slit and a Soller collimator resulted in measured 0.73 mm (fwhm) and 0.59 mm (fwhm) resolutions for the Gd/CsI and Li/CsI convertors, respectively (Figs. 16a, 16b). Unfolding the geometrical effects due to beam collimation, the intrinsic resolutions are 0.65 (fwhm) and 0.4 mm (fwhm) for Gd/CsI and Li/CsI, respectively. The superior imaging performance of the Li/CsI convertors is apparent in Fig. 16b, also as a much narrower width of the distribution at 1% full maximum. It is due on one hand to a larger yield of triton-induced secondary electrons compared to electron-induced secondary electrons in Gd/CsI. On the other hand, the broad shoulders in Gd/CsI may be due to the larger sensitivity to gamma radiation. The 2D imaging performance with the Li/CsI convertor are shown in Figs. 17 and 18, representing a neutron radiographic image of a plastic syringe and of a metal ball-bearing with and without grease.

Applications of the thermal and epithermal neutron detectors described include industrial neutron radiography and tomography and neutron diffractometry. There are possible applications in medical imaging as well.

While the invention has been described with respect to certain embodiments thereof, it will be appreciated by one skilled in the art that variations and modifications may be made without departing from the spirit and scope of the invention.

**Claims**

1. A composite neutron convertor for use in neutron imaging detectors comprising means for conversion of energetic (keV-MeV) neutron induced charged particles resulting from neutron capture into low energy (eV) secondary electrons, said composite neutron convertor comprising efficient secondary electron emitters.

2. A composite neutron convertor according to claim 1, wherein said efficient secondary electron emitter comprises alkali halide secondary electron emitters.

3. A convertor according to claim 2, wherein the alkali halide secondary electron emitters comprise CsI secondary electron emitters.

4. A convertor according to claim 3, further comprising a combination of at least one layer of Gd with the CsI secondary electron emitters.

5. A convertor according to claim 4, comprising at least one metallic layer selected from natural Gd and 157Gd combined with a layer of CsI.

6. A convertor according to claim 5, comprising a combination of at least one layer of $^{157}$Gd foil and CsI secondary electron emitters.

7. A convertor according to any of claims 2 to 6, comprising at least one layer of $^{6}$Li in the form of pure Li or LiH and an alkali halide secondary emitter.

8. A convertor according to any of claims 2 to 7 further comprising at least one layer of $^{177}$Hf and an alkali halide secondary emitter.

9. A combination of a secondary emission composite neutron convertor comprising efficient secondary electron emitters according to claim 1 and an electron multiplier which is sensitive to low energy secondary electrons emitted from the composite neutron convertor.

10. A combination according to claim 9, wherein the electron multiplier comprises a vacuum electron multiplier.

11. A combination according to claim 9, wherein the electron multiplier comprises a gaseous electron imaging multiplier.

12. A neutron imaging detector comprising a multilaminar device for generating secondary electrons, wherein said multilaminar device comprises a composite neutron convertor according to claim 1 having a metallic neutron capture layer selected from natural Gd, $^{157}$Gd, $^{6}$Li and $^{177}$Hf combined with a secondary electron emission material layer of CsI.

13. A neutron imaging detector according to claim 12 further comprising an electron multiplier selected from the group consisting of a vacuum micro channel plate multiplier (MCP) and a gaseous electron imaging multiplier.

14. A neutron imaging detector according to claim 13 comprising a gaseous electron imaging multiplier in which the secondary electrons start to be multiplied at their emission location.

Fig. 1 a

CNC

MCP

imaging anode

charged particle

n

secondary electrons

acceleration gap (1mm)

Fig. 1 b

secondary electrons

incident
X-ray beam

Kapton window

HV1(-)

substrate Mylar+Al

CsI photoconvertor

3.3 mm

HV2(-)

wire mesh

electron
avalanche

20 mm

cathode grid X

MWPC

3.3 mm

anode   grid

HV3(+)

cathode grid Y

**Fig. 2**

Fig. 3

a)

1 mm

200µm

b)

200 µm

95 µm
(intrinsic: ~ 50 µm

Fig. 4

EP 0 682 268 A2

10mm

**Fig. 5**

**Fig. 6**

Fig. 7 a

20

Fig. 7 b

Fig. 8

**Fig. 9**

two−sided CsI coated $^{157}$Gd, 5 μm

λ = 0.18 nm

**Fig. 10**

**Fig. 11 a**

**Fig. 11 b**

**Fig. 12**

secondary electrons

charged particle
primary avalanche

CF

PG { SE

G

Transfer gap

C1

MWPC { A

C2

secondary avalanche

n

**Fig. 13**

PSD          BM          TM C1     T

n-beam

**a)**

PSD C2 B PB     SS     TM C1     T

n-beam

**b)**

**Fig. 14**

Fig. 15 a

Fig. 15 b

**Fig. 16**

a)     b)

air

water

plastic

Fig. 17

a)     b)

**Fig. 18**